# EUROPEAN PATENT SPECIFICATION

(11) **EP 3 454 310 B1**
(45) Date of publication and mention of the grant of the patent: **10.03.2021**
(21) Application number: 16901108.7
(22) Date of filing: 29.12.2016
(51) Int. Cl.: G08B 13/00, G08B 13/196, G08B 27/00, G08B 21/18, G08B 25/08, G08B 25/14, H04N 7/18, G08B 25/01

(54) **METHOD AND DEVICE FOR PREVENTING CCTV SET-TOP BOX FROM BEING STOLEN**
VERFAHREN UND VORRICHTUNG ZUR VERHINDERUNG DES DIEBSTAHLS EINER CCTV-SET-TOP-BOX
PROCÉDÉ ET DISPOSITIF DE PRÉVENTION DE VOL DE BOÎTIER DÉCODEUR CCTV

(30) Priority: 04.05.2016 KR 20160055620
(43) Date of publication of application: 13.03.2019
(73) Proprietor: JD-Media Co., Ltd., Hwaseong-si, Gyeonggi-do 18633 (KR)
(72) Inventor: KIM, Suck Ho, Yongin-si Gyeonggi-do 17126 (KR)
(74) Representative: Kransell & Wennborg KB
(86) International application number: PCT/KR2016/015499
(87) International publication number: WO 2017/191882

(56) References cited:
- GB-A- 2 380 081
- JP-A- 2004 304 466
- KR-A- 20100 102 369
- KR-B1- 101 054 714
- KR-B1- 101 572 486
- KR-Y1- 200 405 518
- US-A1- 2010 165 133
- US-A1- 2012 268 550
- US-A1- 2015 022 338

## Description

### [Technical Field]

The present invention relates to a method and a CCTV set-top box with anti-theft function, in which since a power cable and an image cable are necessarily detached when the CCTV-set-top box is stolen and the bottom of the set-top box is separated when the set-top box is moved, any change in a state of the CCTV-set-top box is automatically detected and a storage screen from the time when the change is detected to the time before a predetermined time is automatically transmitted to a third place or number designated by a user, thereby confirming a vivid screen from before the accident to the occurrence of the accident.

### [Background Art]

Recently, due to an upsurge in crime, in not only important facilities but also private houses, buildings, and alleyways, CCTVs (surveillance cameras) are installed to capture and store crime scenes and criminal activities and transmit the crime scenes and criminal activities to a guard office and have been widely used to prevent occurrence of crimes and handle incidents.

As an example of a system for steal prevention using such a CCTV, in Korean Patent Publication No. 10-2004-0082083 (published on September 24, 2004), there is disclosed a preventing system of dynamic photographing and interlocking against robbery by using a mobile phone, in which a turning sensor, a directional sensor, and an image capturing device are installed around locking equipment of a door or a window, respectively, to determine the approach of an abnormal behavior person and capture the approach, inform the image of the abnormal behavior person to a user (a homeowner, an employee, etc.) through a mobile communication or Internet so that the user can make a quicker judgment, and enable image searching and controlling through a mobile phone as well as self-capturing.

However, recently, criminals have been forced to turn off the power of the CCTV set-top box capturing and storing their actions or even disconnect and cut the CCTV set-top box from its power supply so that their actions can not be tracked. As such, if the power to the CCTV is turned off, even a good CCTV device can not perform the set function, which is a useless thing.

US 2010/0165133 discloses a lost registration request reception unit that acknowledges a direction to cause an imaging device to capture an image and to acknowledge identification information of the imaging device.

### [Disclosure]

### [Technical Problem]

The invention is defined by the appended claims.

An object of the present invention is to solve the problem that a CCTV function is not be performed when the power is disconnected from the CCTV in the related art and provide a method for preventing a CCTV set-top box from being stolen in which when the power connection to the CCTV set-top box is interrupted, the disconnection is detected, an internal battery is automatically connected, and a predetermined time from the time when the power is interrupted and a predetermined screen frame are transmitted to a third place designated by the user to monitor the last moment of the stored screen even if the set-top box is lost or stolen.

Another object of the present invention is a CCTV set-top box with anti-theft function in which when the power to the CCTV set-top box is disconnected, an auxiliary battery is automatically connected by an auxiliary power supply built in a central processing unit of a main body, the separation or interruption of the power supply together with location information are transmitted to a manager, and a camera of the CCTV transmits the last image immediately before being separated from the set-top box to the third place to transmit the last stored image even if the set-top box is stolen, and then execution of its duty is terminated, thereby putting emphasis on meaning nothing even if an intruder takes the set-top box.

### [Technical Solution]

In order to achieve the objects, according to the present invention, there is provided a method for preventing a CCTV set-top box from being stolen, the method comprising the steps of: confirming whether a main power supply is turned on or not (step S1); controlling an image capturing unit so as to capture a preset area according to a pre-programmed CCTV camera operating mode while the main power supply is connected (step S2); recording capturing data obtained by the image capturing unit in the above step (step S2) and returning to a point preceding the above step (step S1) (step S3); storing image data captured by the image capturing unit in the above step (step S2) in a storing unit and transmitting the stored image data to a mobile phone which is a mobile communication device of a manager through a communication unit or transmitting and storing the image data to a management server (step S3): automatically connecting an auxiliary battery when the main power supply is tuned off in the above step (step S1) (step S4); and transmitting occurrence of the problem of the set-top box to the mobile phone of the manager and the server indicating that the main power supply is turned off through the communication unit and being connected to a point preceding the above step (step S2) (step S5).

In step (step S1), when the main power supply is turned off, the central processing unit may operate by an auxiliary power supply built in the central processing unit to be connected with an auxiliary battery.

In step (step S2), the image captured by the image capturing unit may be MPEG-encoded in a storage control unit.

According to the present invention, there is provided a CCTV set-top box with anti-theft function, the CCTV set-top box comprising: a detection sensor unit that includes a plurality of detection sensors and searches directions in a predetermined angle range; a sensor control amplification unit that amplifies a signal of the detection sensor unit; a central processing unit that receives and processes the amplified signal of the sensor control amplification unit and has an auxiliary power supply; a storage unit that converts and stores an image captured by an image capturing unit installed outside the set-top box so as to capture a preset area according to a pre-programmed CCTV camera operating mode under the control of the central processing unit in a predetermined manner by a storage control unit; and a communication unit that transmits the image of the image capturing unit under the control of the central processing unit.

The CCTV set-top box may further include an auxiliary battery that is automatically connected by operating the central processing unit by the built auxiliary power supply when the main power supply is interrupted in the central processing unit.

When the main power supply to the set-top box is interrupted, the central processing unit may transmit a state of the set-top box and capturing data of the image capturing unit to a mobile phone which is a mobile communication device of a manager or a management server through the communication unit.

The detection sensor unit may include a plurality of infrared detections sensors which transmits a signal searched by searching a direction in a predetermined angle range to the central processing unit, and the central processing unit may determine the magnitude of the signal transmitted from each detection sensor and judge that there is an abnormal behavior person when the magnitude is a predetermined magnitude or higher.

### [Advantageous Effects]

According to the present invention, when the power connection to the CCTV set-top box is interrupted, an image immediately before the power connection is interrupted is transmitted to a manager for a specific time and a specific recording frame to prevent the CCTV set-top box from being stolen.

Further, at the time of the interruption from the power supply performed necessarily when the CCTV set-top box is stolen, the interruption is detected and the auxiliary battery is automatically connected to collect continuously evidence of a related crime, thereby facilitating prevention of crime and the solution and easily applying the CCTV set-top box without changing a large structural change to the existing CCTV.

### [Description of Drawings]

FIG. 1 is a schematic diagram of a device for preventing a CCTV set-top box from being stolen according to the present invention.
FIG. 2 is a schematic block diagram of a method for preventing a CCTV set-top box from being stolen by the device for preventing the CCTV set-top box from being stolen of FIG. 1.

### [Best Mode of the Invention]

Hereinafter, the present invention will be described in more detail with reference to the accompanying drawings illustrating embodiments of the present invention.

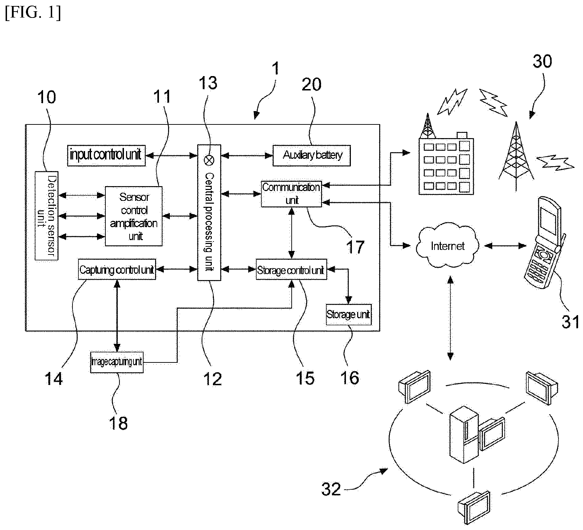

In FIG. 1, a CCTV set-top box 1 includes a detection sensor unit 10, a sensor control amplification unit 11 amplifying a signal of the detection sensor unit, a central processing unit 12 receiving and processing the amplified signal of the sensor control amplification unit and having an auxiliary power supply 13, a storage unit 16 converting and storing an image captured by an image capturing unit 18 installed outside the set-top box so as to capture a preset area according to a pre-programmed CCTV camera operating mode under the control of the central processing unit in a predetermined manner by a storage control unit 15, an auxiliary battery 20 connected by operating the central processing unit by the built auxiliary power supply 13 when the main power supply is interrupted in the central processing unit, and a communication unit 17 transmitting the image of the image capturing unit 18 under the control of the central processing unit.

The image capturing unit 18 is at least one camera installed in a preset area around a building and the like. Further, it is preferable that an input control unit for inputting preset conditions in advance in the set-top box is provided.

The communication unit 17 transmits the image captured by the image capturing unit18 through a mobile relay system 30 to a mobile phone 31 which is a mobile communication device of the manager or transmits and stores the image to a management server 32.

The detection sensor unit 10 includes a plurality of detection sensors, searches directions in a predetermined angle range, and transmits the searched signal to the central processing unit 12.

Further, the central processing unit 12 encodes the captured and input signal into MPEG codes to output the MPEG-encoded signal to a memory of a rear storage unit 16. The magnitude of the signal captured by the camera of the image capturing unit 18 is very large. Accordingly, when the MPEG-encoding is performed, the amount of the captured signal becomes very small. In this case, the captured signal is not largely occupied in the memory to be easily stored. Particularly, since the capturing data needs to be transmitted to the mobile phone of the user using a mobile communication or Internet, there is a need to compress the signal through MPEG encoding and the like. Such MPEG encoding can be performed by hardware or software.

Also, when the main power supply to the set-top box is interrupted, the central processing unit 12 transmits a state of the set-top box and an image from the time of occurrence of the accident back to the time before a predetermined time.

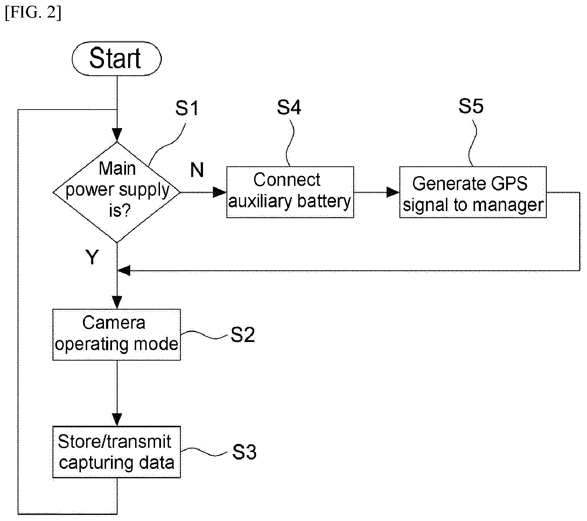

According to the present invention, the central processing unit 12 performs a method for steal prevention according to a preset program as illustrated in the block diagram illustrated in FIG. 2 in accordance with the interruption of the main power supply. That is, the method includes confirming whether the main power supply is turned on (step S1), controlling the image capturing unit 13 in an operating mode by the capturing control unit 14 so as to capture a preset area according to a predetermined CCTV camera operating mode while the main power supply is connected (step S2), MPEG-encoding the captured image by the storage control unit 15 under the control of the central processing unit 12 and storing the capturing data in the storage unit 16 and transmitting the capturing data to the microphone 31 which is a mobile communication device of a manager through a mobile relay system 30 via a communication unit 17 or transmitting and storing the capturing data to a management server (step S3).

The above step (step S3) returns to a point preceding the step (step S1) of confirming whether the main power supply is interrupted and the steps S1 and S3 are repeatedly performed.

In the step (step S1), for example, when a power supply cable is necessarily cut to steal the set-top box and the main power supply is turned off, in the step (step S4), the auxiliary battery 20 is automatically connected by the central processing unit 12 operating by the auxiliary power supply 13. In this case, a GPS signal for location information of the set-top box is generated to the mobile phone 31 of the manager and the server 32 to be transmitted through the communication unit 17 (step S5), and the camera operating mode of the image capturing unit in the step (step S2) and the capturing data of the step (step S3) are stored and transmitted to secure images related with a moving route of the stolen set-top box, thereby further facilitating crime treatment using set-top box stealing crime information.

It is preferred that the capturing control unit and the image capturing unit 18 are wirelessly connected to each other so that the camera as the image capturing unit 18 installed on a building or the like normally operates through the capturing control unit 14 under the control of the central processing unit to collect surrounding situation information related with the crime, even if the set-top box is stolen and moved.

### [Industrial Availability]

According to the present invention, in a CCTV having a set-top box and a camera as an image capturing unit, even if the set-top box is stolen, image information capturing a crime situation is transmitted to a manager and a server to be used in crime treatment.

**[Explanation of Reference Numerals and Symbols]**

| | |
|---|---|
| 1: Set-top box | 10: Detection sensor unit |
| 11: Sensor control amplification unit | 12: Central processing unit |
| 13: Auxiliary power supply | 14: Capturing control unit |
| 15: Storage control unit | 16: Storage unit |
| 17: Communication unit | 18: Image capturing unit |
| 20: Auxiliary battery | 31: Mobile phone of manager |
| 32: Management server | |

## Claims

1. A method for preventing a CCTV set-top box from being stolen, the method performed by the CCTV set-top box comprising steps of
confirming whether a main power supply to the CCTV set-top box is turned on or not (step S1);
controlling an image capturing unit installed outside the set-top box so as to capture a preset area according to a pre-programmed CCTV camera operating mode under the control of a central processing unit (12) of the CCTV set-top box while the main power supply is connected (step S2);
storing image data captured by the image capturing unit in the above step (step S2) in a storage unit, transmitting the stored image data to a mobile phone which is a mobile communication device of a manager through a communication unit or transmitting and storing the image data to a management server, and returning to the confirming step (step S1) (step S3);
automatically connecting an auxiliary battery by the central processing unit (12) when the main power supply is turned off in the above step (step S1) (step S4); and
transmitting a state of the set-top box to the mobile phone of the manager and the server indicating that the main power supply is turned off through the communication unit and returning to the controlling step (step S2) (step S5),
wherein when the main power supply to the set-top box is interrupted, the central processing unit transmits and stores a state of the set-top box and captured images from the time of interruption back to a predetermined time before the time of interruption to secure images related with a moving route of the stolen set-top box, thereby facilitating the resolution of the set-top box stealing crime.

2. The method of claim 1, wherein in step (step S1), when the main power supply is turned off, the central processing unit operates by an auxiliary power supply built in the central processing unit to be connected with an auxiliary battery.

3. The method of claim 1, wherein in step (step S2), the image captured by the image capturing unit is MPEG-encoded in a storage control unit.

4. A CCTV set-top box with anti-theft function, the CCTV set-top box comprising:
a detection sensor unit (10) that includes a plurality of detection sensors and searches directions in a predetermined angle range;
a sensor control amplification unit (11) configured to amplify a signal of the detection sensor unit;
a central processing unit (12) configured to receive and processes the amplified signal of the sensor control amplification unit and has an auxiliary power supply (13);
a storage unit (16) configured to convert and store an image captured by an image capturing unit (18) installed outside the set-top box so as to capture a preset area according to a pre-programmed CCTV camera operating mode under the control of the central processing unit in a predetermined manner by a storage control unit (15); and
a communication unit (17) configured to transmit the image of the image capturing unit under the control of the central processing unit,
further comprising-an auxiliary battery (20) that is automatically connected by operating the central processing unit by the built auxiliary power supply when the main power supply is interrupted in the central processing unit,
wherein when the main power supply to the set-top box is interrupted, the central processing unit is configured to transmit a state of the set-top box and captured images from the time of interruption back to a predetermined time before the time of interruption to a mobile phone (31) which is a mobile communication device of a manager or a management server (32) through the communication unit, the detection sensor unit includes a plurality of infrared detections sensors which are configured to transmit a signal searched by searching a direction in a predetermined angle range to the central processing unit, and the central processing unit is configured to determine the magnitude of the signal transmitted from each detection sensor and to judge that there is an abnormal behavior person when the magnitude is a predetermined magnitude or higher.

## Patentansprüche

1. Verfahren zum Verhindern des Stehlens einer CCTV-Set-Top-Box, wobei das Verfahren von der CCTV-Set-Top-Box durchgeführt wird und die folgenden Schritte umfasst:
Bestätigen, ob eine Hauptstromversorgung der CCTV-Set-Top-Box eingeschaltet ist oder nicht (Schritt S1);
Steuern einer Bilderfassungseinheit, die außerhalb der Set-Top-Box installiert ist, um unter der Steuerung einer zentralen Verarbeitungseinheit (12) der CCTV-Set-Top-Box einen voreingestellten Bereich gemäß einem vorprogrammierten CCTV-Kamerabetriebsmodus zu erfassen, während die Hauptstromversorgung verbunden ist (Schritt S2);
Speichern von Bilddaten, die von der Bilderfassungseinheit im obigen Schritt (Schritt S2) erfasst wurden, in einer Speichereinheit,
Übertragen der gespeicherten Bilddaten über eine Kommunikationseinheit zu einem Mobiltelefon, das eine mobile Kommunikationsvorrichtung eines Verwalters ist, oder Übertragen und Speichern der Bilddaten zu einem Verwaltungsserver und Zurückkehren zum Schritt des Bestätigens (Schritt S1) (Schritt S3);
automatisches Verbinden einer Hilfsbatterie durch die zentrale Verarbeitungseinheit (12), wenn die Hauptstromversorgung im obigen Schritt (Schritt S1) ausgeschaltet ist (Schritt S4); und
Übertragen eines Status der Set-Top-Box über die Kommunikationseinheit zum Mobiltelefon des Verwalters und zum Server, der anzeigt, dass die Hauptstromversorgung ausgeschaltet ist, und Zurückkehren zum Schritt des Steuerns (Schritt S2) (Schritt S5),
wobei die zentrale Verarbeitungseinheit, wenn die Hauptstromversorgung der Set-Top-Box unterbrochen ist, einen Status der Set-Top-Box sowie erfasste Bilder von der Zeit der Unterbrechung zurück zu einer vorbestimmten Zeit vor der Zeit der Unterbrechung überträgt und speichert, um Bilder zu sichern, die eine Bewegungsroute der gestohlenen Set-Top-Box betreffen, um dadurch die Auflösung des Diebstahls der Set-Top-Box zu ermöglichen.

2. Verfahren nach Anspruch 1, wobei die zentrale Verarbeitungseinheit, wenn die Hauptstromversorgung ausgeschaltet ist, in Schritt (Schritt S1) von einer Hilfsstromversorgung betrieben wird, die in die zentrale Verarbeitungseinheit eingebaut ist und mit einer Hilfsbatterie zu verbinden ist.

3. Verfahren nach Anspruch 1, wobei in Schritt (Schritt S2) das von der Bilderfassungseinheit erfasste Bild in einer Speichersteuereinheit MPEG-codiert wird.

4. CCTV-Set-Top-Box mit Diebstahlschutzfunktion, wobei die CCTV-Set-Top-Box Folgendes umfasst:
eine Detektionssensoreinheit (10), die eine Vielzahl von Detektionssensoren beinhaltet und in Richtungen in einem vorbestimmten Winkelbereich sucht;
eine Sensorsteuerungsverstärkungseinheit (11), die dazu ausgelegt ist, ein Signal der Detektionssensoreinheit zu verstärken;
eine zentrale Verarbeitungseinheit (12), die dazu ausgelegt ist, das verstärkte Signal der Sensorsteuerungsverstärkungseinheit zu empfangen und zu verarbeiten, und eine Hilfsstromversorgung (13) aufweist;
eine Speichereinheit (16), die dazu ausgelegt ist, ein Bild, das von einer Bilderfassungseinheit (18) erfasst wurde, die außerhalb der Set-Top-Box installiert ist, umzuwandeln und zu speichern, um unter der Steuerung der zentralen Verarbeitungseinheit in einer vorbestimmten Weise einen voreingestellten Bereich gemäß einem vorprogrammierten CCTV-Kamerabetriebsmodus mittels einer Speichersteuereinheit (15) zu erfassen; und
eine Kommunikationseinheit (17), die dazu ausgelegt ist, das Bild der Bilderfassungseinheit unter der Steuerung der zentralen Verarbeitungseinheit zu übertragen,
die ferner eine Hilfsbatterie (20) umfasst, die durch Betreiben der zentralen Verarbeitungseinheit durch die eingebaute Hilfsstromversorgung, wenn die Hauptstromversorgung in der zentralen Verarbeitungseinheit unterbrochen ist, automatisch verbunden wird,
wobei die zentrale Verarbeitungseinheit, wenn die Hauptstromversorgung zur Set-Top-Box unterbrochen ist, dazu ausgelegt ist, einen Status der Set-Top-Box sowie erfasste Bilder von der Zeit der Unterbrechung zurück zu einer vorbestimmten Zeit vor der Zeit der Unterbrechung über die Kommunikationseinheit zu einem Mobiltelefon (31), das eine mobile Kommunikationsvorrichtung eines Verwalters ist, oder einem Verwaltungsserver (32) zu übertragen, die Detektionssensoreinheit eine Vielzahl von Infrarotdetektionssensoren beinhaltet, die dazu ausgelegt sind, ein durch Suchen in einer Richtung in einem vorbestimmten Winkelbereich gesuchtes Signal zur zentralen Verarbeitungseinheit zu übertragen, und die zentrale Verarbeitungseinheit dazu ausgelegt ist, die Größe des Signals, das von jedem Detektionssensor übertragen wird, zu bestimmen und zu beurteilen, dass eine Person mit unnormalem Verhalten existiert, wenn die Größe eine vorbestimmte Größe oder größer ist.

## Revendications

1. Procédé pour empêcher le vol d'un décodeur CCTV, le procédé exécuté par le décodeur CCTV comprenant les étapes consistant à :
confirmer si une alimentation principale du décodeur CCTV est allumée ou non (étape S1) ;
commander une unité de capture d'image installée à l'extérieur du décodeur de manière à capturer une zone prédéfinie selon un mode de fonctionnement de la caméra CCTV préprogrammée sous la supervision d'une unité centrale de traitement (12) du décodeur CCTV tandis que l'alimentation principale est connectée (étape S2) ;
mémoriser des données d'image capturées par l'unité de capture d'image à l'étape ci-dessus (étape S2) dans une unité de mémorisation,
transmettre des données d'image mémorisées à un téléphone mobile qui est un dispositif de communication mobile d'un gestionnaire via une unité de communication ou transmettre et mémoriser les données d'image vers un serveur de gestion, et revenir à l'étape de confirmation (étape S1) (étape S3) ;
connecter automatiquement par l'unité centrale (12) une batterie auxiliaire lorsque l'alimentation principale est coupée à l'étape ci-dessus (étape S1) (étape S4) ; et
transmettre un état du décodeur au téléphone mobile du gestionnaire et du serveur indiquant que l'alimentation principale est coupée via l'unité de communication et revenir à l'étape de commande (étape S2) (étape S5),
dans lequel lorsque l'alimentation principale du décodeur est interrompue, l'unité centrale de traitement transmet et mémorise un état du décodeur et des images capturées à partir du moment de l'interruption jusqu'à un temps prédéterminé avant le moment de l'interruption pour sécuriser des images liées à un itinéraire de déplacement du décodeur volé, facilitant ainsi la résolution du délit de vol de décodeur.

2. Procédé selon la revendication 1, dans lequel à l'étape (étape S1), lorsque l'alimentation principale est coupée, l'unité centrale de traitement fonctionne par une alimentation auxiliaire intégrée dans l'unité centrale de traitement pour être connectée à une batterie auxiliaire.

3. Procédé selon la revendication 1, dans lequel à l'étape (étape S2), l'image capturée par l'unité de capture d'image est codée MPEG dans une unité de commande de mémorisation.

4. Décodeur CCTV avec fonction antivol, le décodeur CCTV comprenant :
une unité de capteur de détection (10) qui comprend une pluralité de capteurs de détection et recherche des directions dans une plage angulaire prédéterminée,
une unité d'amplification de commande de capteur (11) configurée pour amplifier un signal de l'unité de capteur de détection ;
une unité centrale de traitement (12) configurée pour recevoir et traiter le signal amplifié de l'unité d'amplification de commande de capteur et qui possède une alimentation auxiliaire (13) ;
une unité de mémorisation (16) configurée pour convertir et mémoriser une image capturée par une unité de capture d'image (18) installée à l'extérieur du décodeur de manière à capturer une zone prédéfinie selon un mode de fonctionnement de caméra CCTV préprogrammé sous la supervision de l'unité centrale de traitement d'une manière prédéterminée par une unité de commande de mémorisation (15) ; et
une unité de communication (17) configurée pour transmettre l'image de l'unité de capture d'image sous la supervision de l'unité centrale de traitement, comprenant en outre
une batterie auxiliaire (20) qui est automatiquement connectée en faisant fonctionner l'unité centrale de traitement par l'alimentation auxiliaire intégrée lorsque l'alimentation principale est interrompue dans l'unité centrale de traitement,
dans lequel lorsque l'alimentation principale du décodeur est interrompue, l'unité centrale de traitement est configurée pour transmettre un état du décodeur et une heure d'interruption capturée à une heure prédéterminée avant l'heure d'interruption d'un téléphone mobile (31) qui est un dispositif de communication mobile d'un gestionnaire ou d'un serveur de gestion (32) par l'intermédiaire de l'unité de communication, l'unité de capteur de détection comprend une pluralité de capteurs de détection infrarouge qui sont configurés pour transmettre un signal recherché en recherchant une direction dans une plage angulaire prédéterminée vers l'unité centrale de traitement, et l'unité centrale de traitement est configurée pour déterminer l'amplitude du signal transmis par chaque capteur de détection et pour estimer qu'il y a une personne au comportement anormal lorsque la grandeur est une grandeur prédéterminée ou supérieure.
